# EUROPÄISCHE PATENTSCHRIFT

(11) **EP 2 544 910 B1**
(45) Veröffentlichungstag und Bekanntmachung des Hinweises auf die Patenterteilung: **07.05.2014**
(21) Anmeldenummer: 10716027.7
(22) Anmeldetag: 09.03.2010
(51) Int. Cl.: B63B 17/00, B60K 15/077, B60K 15/03, B63B 11/04, B63B 43/04

(54) **KRAFTSTOFFTANK**
FUEL TANK
RÉSERVOIR DE CARBURANT

(43) Veröffentlichungstag der Anmeldung: 16.01.2013
(73) Patentinhaber: Noskov, Rostislav, Kaliningrad 236029 (RU)
(72) Erfinder: Noskov, Rostislav, Kaliningrad 236029 (RU)
(74) Vertreter: Jeck, Anton
(86) Internationale Anmeldenummer: PCT/IB2010/000487
(87) Internationale Veröffentlichungsnummer: WO 2011/110881

(56) Entgegenhaltungen:
- DE-A1-102004 047 292
- GB-A- 2 434 416

## Beschreibung

Die Erfindung betrifft einen Kraftstofftank nach dem Oberbegriff des Anspruchs 1.

Die Erfindung ist im Kraftfahrzeugbau und zwar bei der Konstruktion eines Kraftstofftanks einsetzbar.

Aus der RU 2301180 ist eine Einrichtung zur Lagerung und Förderungen von Flüssigkomponenten bekannt. Die Einrichtung weist einen Rahmen mit einer darauf aufgebauten Tankbegasungsanlage und einem Kraftstofftank für Kraftstoff und Oxydans, einschließlich eines Gehäuses und einer inneren elastischen Membran auf. Die Membran ist mit einem auf ihrer Oberfläche befestigten spiralförmigen Versteigungselement versehen und mit dem Gehäuse des Kraftstofftanks verbunden.

Die Nachteile der bekannten Einrichtung umfassen Wellenschwankungen des Kraftstoffs im Kraftstofftank, die das Aufbauen einer statischen Elektrizität verursachen. Zu den anderen Mängeln gehört auch eine periodisch entstehende Kraftstoffverschiebung im Tank. Dadurch wird die Schwerpunktlage des Kraftstoffs verschoben. Das kann negative Auswirkungen haben und muss bei der Entwicklung der konstruktiven Ausbildung und dem Betrieb berücksichtigt werden.

Aus der RU 2005633 ist ein Kraftstofftank für Kraftfahrzeuge bekannt, welcher eine in seinem Raum angeordnete flexible Hülle und einen im oberen Teil des Tanks angeordneten Einfüllstutzen aufweist. Der Einfüllstutzen ist mit einem Abdichtungselement mit Dichtungsringen versehen. Die flexible Hülle ist so ausgebildet, dass ihre Oberfläche die Fläche der Wände im Tankraum überschreitet. Die Oberfläche der flexiblen Hülle ist wellenförmig oder gelocht ausgebildet.

Die Funktionsmöglichkeiten dieses beschriebenen Kraftstofftanks umfassen eine Unterdrückung der Schwankungen des flüssigen Kraftstoffs innerhalb des Tanks. Diese Lösung schließt jedoch eine Bewegung des Kraftstoffs im Tank nicht aus. Das beeinträchtigt die Stabilität des Fahrzeugs beim Fahren über eine Bahnkurve.

Aus dem Stand der Technik ist ein Vergasermotor bekannt (RU 2116495), welcher einen hin- und hergehenden Kolben und einen Kraftstofftank mit einem Kraftstoff- und Überkraftstoffraum aufweist. Der Kraftstoffraum ist mittels einer Rohrleitung mit einer Gemischaufbereitungsanlage verbunden. Der Überkraftstoffraum ist mit einer Leitung für eine Überdruckzuführung versehen. Die Eintrittsöffnung dieser Leitung ist mit einer Zylinderarbeitskammer verbunden. Im Kraftstofftank ist eine elastische Membran eingebaut, deren Umfang und Form mit der des Kraftstofftanks übereinstimmt. Die Membran teilt den Tankraum in einen Kraftstoffraum und einen darüber angeordneten Überkraftstoffraum auf.

Diese bekannte technische Lösung schließt Kraftstoffschwankungen sowie Bewegungen im Kraftstofftank unter Einwirkung der Zentrifugalkräfte bei Manövern des

Fahrzeugs nicht aus. Das bedingt eine Minderung der Stabilität des Fahrzeugs auf der Straße. Außerdem verursachen die Wellenschwankungen des Kraftstoffs, die je nach Entleeren des Tanks zunehmen, eine Speicherung der statischen Elektrizität.

Durch die gattungsbildende GB 2 434 416 A ist ein Kraftstofftank mit einer elastischen Trennwand bekannt, die den Kraftstofftank auskleidet. Die elastische Trennwand teilt den Kraftstoff-raum in einen Kraftstoffraum sowie einen Überkraftstoffraum mit sich gegenseitig veränderbaren Umfängen auf. Der Kraftstoffraum ist mit einem Entnahmestutzen versehen. Der Überkraftstoffraum ist mit einer Leitung für eine Überdruckzuführung versehen.

Durch DE 10 2004 047 292 A1 ist ein Kraftstofftank mit mehreren darin angeordneten, bedarfsweise aufpumpbaren elastischen Blasen bekannt. Durch an gegenüberliegenden Seiten des Kraftstofftanks angeordnete Blasen kann der Kraftstoff in eine gewünschte Richtung verdrängt werden.

Es ist Aufgabe der Erfindung, die Stabilität des Fahrzeugs beim Fahren über eine Bahnkurve zu erhöhen.

Die gestellte Aufgabe wird durch die Merkmale des Anspruchs 1 gelöst.

Das erforderliche technische Ergebnis in einem bekannten Kraftstofftank wird auf folgende Weise erreicht:
Der Kraftstofftank enthält eine elastische (waagerechte) Trennwand. Die elastische Trennwand hat die gleiche Form und Umfang des Kraftstofftanks und trennt den Kraftstofftank in zwei Räume, einen Kraftstoffraum und einen Überkraftstoffraum. Dabei können sich der Kraftstoffraum und der Überkraftstoffraum in ihren Umfängen gegenseitig verändern. Der Kraftstoffraum ist mit einem Einfüllstutzen versehen. Der Überkraftstoffraum ist mit einer Leitung für eine Überdruckzuführung versehen. Es ist gemäß der Erfindung vorgeschlagen, den Umfang des Überkraftstoffraums in einzelne abgedichtete und senkrecht ausgerichtete Kleinräume aufzuteilen. Darüber hinaus ist vorgeschlagen, jeden solchen Kleinraum mit einer getrennten Überdruckzu- und einer -ableitung zu versehen und diesen mit einer Steuereinheit zu verbinden.

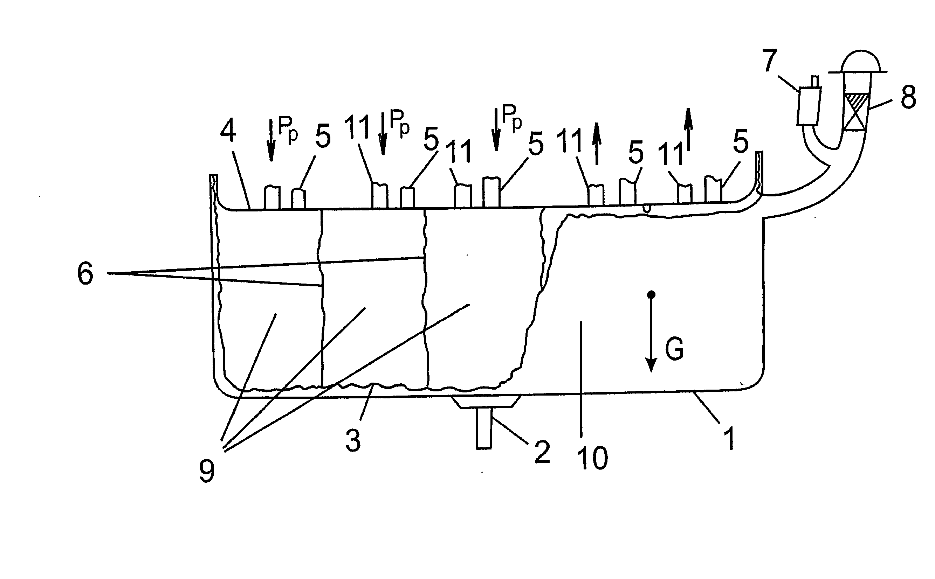

Die Erfindung wird anhand eines in der Zeichnung dargestellten Ausführungsbeispiels näher erläutert.

Der Kraftstofftank des Fahrzeugs, welches über die Bahnkurve fährt, ist mit 50 % mit Kraftstoff gefüllt. Der Schwerpunkt des Tanks ist vom Mittelpunkt versetzt angeordnet.

In der Zeichnung sind folgende Bezugsziffern verwendet:
1 - Tankgehäuse,
2 - Einlauföffnung,
3 - elastische Trennwand,
4 -Tankdeckel,
5 - Leitungen für eine Überdruckzuführung,
6 - Scheideelement des Überkraftstoffraums,
7 - Schwimmerventil für einen Gasablass aus dem Flüssigkeitsraum des Tanks,
8 - Einfüllstutzen mit einem nichtwiederkehrenden Ventil,
9 - abgetrennte Kleinräume des Überkraftstoffraums,
10 - Kraftstoffraum,
11 - Druckableitung,
Pₚ - Arbeitsgasüberdruck, welcher für eine Verschiebung des Kraftstoffs und zur Minderung der Kraftstoffverdunstungsverluste erforderlich ist,
Pₐ - Arbeitsgasdruck, welcher dem atmosphärischen Druck gleich ist und
G - Kraftstoffschwerpunkt.

Der vorgeschlagene Kraftstofftank besteht aus einem Gehäuse 1, welches mit einer Entnahmeeinrichtung 2 in seinem unteren Teil angeordnet und mittels einer elastischen Trennwand 3 in einen Überkraftstoffraum und einen Kraftstoffraum 10 aufgeteilt ist. Die Form der elastischen Trennwand 3 ist als ein oben geöffneter Behälter ausgebildet. Die Form und der Umfang des Behälters entsprechen denen des Tankgehäuses. Die elastische Trennwand 3 ist luftdicht z. B. am Rand eines Deckels 4 befestigt. Der durch die elastische Trennwand 3 begrenzte Überkraftstoffraum ist in separate abgedichtete Kleinräume 9 aufgeteilt. An dem Deckel 4 des Tanks sind Leitungen 5 für eine Überdruckzuführung sowie für eine schnelle Druckableitung 11 angeordnet. Jeder Kleinraum 9 des Überkraftstoffraums ist mit einer getrennten Zuleitung 5 und Ableitung 11 des Überdrucks versehen. Der Kleinraum 9 ist über ein Regelorgan mit einer Steuereinheit gekoppelt (in der Figur nicht abgebildet). Der Kraftstoffraum 10 des Tanks ist mit einem Schwimmerventil 7 für einen Einlass der Kraftstoffverdampfungen ausgerüstet.

Die Funktion der vorgeschlagenen technischen Lösung ist wie folgt:
Bei einer geradlinigen Bewegung des Fahrzeugs ist die Belastung auf die Räder gleichmäßig verteilt. Beim Fahren in einer Bahnkurve ist der Kraftstoff im Tank unter der Einwirkung der Zentrifugalkräfte verschoben. Dies verursacht eine Verschiebung des Schwerpunkts des Fahrzeugs und folglich eine Umverteilung der Belastungen auf die Räder. Die im Halbmesser des Innenwendekreises fahrenden Räder sind weniger belastet.

Die Belastung der Räder im Halbmesser des Außenwendekreises nimmt zu. Eine solche Umverteilung der Belastungen vermindert die Stabilität des Fahrzeugs auf der Straße. Beim Einsatz der vorgeschlagenen technischen Lösung ist die Stabilität des Fahrzeugs beim Fahren in einer Bahnkurve mittels einer Umverteilung der gegenseitig sich veränderbaren Umfänge des Kraftstoffraums 10 und des Überkraftstoffraums erhöht. Dabei ist nicht nur die Minderung der Stabilität des Fahrzeugs beim Einfahren in die Kurve auf der Straße im Voraus verhindert, sondern auch die Stabilität des Fahrzeugs dabei erhöht. Dafür ist der entsprechende Befehl über eine Änderung der Kraftstoffbewegung im Tank von der Steuereinheit abgegeben.

Wenn das Fahrzeug z. B. ein Rechtsabbiegen anfängt, beginnt der Kraftstoff im Kraftstofftank unter der Einwirkung der Zentrifugalkräfte, sich nach links zu verschieben. Zu diesem Zeitpunkt gibt die Steuereinheit einen Befehl über die Bewegung des Kraftstoffs zum rechten Teil des Tanks. Dies führt zu einer Verschiebung des Schwerpunkts des Kraftstofftanks. Dies führt zur Erhöhung der Belastung auf die Räder, die über den Halbmesser des Innenwendekreises fahren. Wenn das Fahrzeug nach links abbiegt, dann ist der Kraftstoff in den linken Teil des Tanks verlagert.

Ein solcher Effekt ist auf folgende Weise erreicht:
Beim Motoranlassen gibt die Steuereinheit den Befehl ab, alle separaten abgedichteten und senkrecht ausgerichteten Kleinräume 9 des Überkraftstoffraums mit Arbeitsgas z. B. mit Luft vom Kompressor zu füllen. Die Einfüllung erfolgt über Arbeitsgaszuleitungen 5, indem ein erhöhter Arbeitsluftdruck Pp eingestellt wird. Wird es nötig, den Schwerpunkt des Kraftstoffs im Tank z. B. nach rechts zu verlagern, so wird über die Steuereinheit der Befehl gegeben, den Druck in den Kleinräumen 9 des Überkraftstoffraums über die rechts vom Mittelpunkt angeordneten Arbeitsluftableitungen 11 abzubauen. Dabei wird der Druck in den Ableitungen 11 bis zum atmosphärischen Druck Pₐ abgebaut. Das führt dazu, dass der Kraftstoff in die Kleinräume 9 überfließt, wo der Druck Pₐ beträgt. Und die unter dem Überdruck Pp gebliebenen Kleinräume 9 des Überkraftstoffraums auf der linken Seite werden die Form des Vollraums annehmen. Damit wird der Kraftstoff und sein Schwerpunkt in die erforderliche Richtung versetzt.

Der Überdruck Pₚ des Kraftstoffs im Tank ermöglicht es, die Kraftstoffverdunstungsverluste zu vermindern. Der Kraftstoffraum ist im Tank durch die Tankwände und die elastische Trennwand 3 begrenzt. Der in diesem Kraftstoffraum 10 enthaltene Kraftstoff beendet sein Plätschern bei der Bewegung des Fahrzeugs. Das ermöglicht es, den negativen Effekt der Speicherung von statischer Elektrizität zu vermindern.

## Patentansprüche

1. Kraftstofftank mit einer elastischen Trennwand (36), die den Kraftstofftank auskleidet und in einen Kraftstoffraum (10) sowie einen Überkraftstoffraum mit sich gegenseitig veränderbaren Umfängen aufteilt, wobei der Kraftstoffraum (10) mit einem Einfüllstutzen (8) und der Überkraftstoffraum (9) mit einer Leitung (5) für eine Überdruckzuführung versehen ist, wobei
die elastische Trennwand (36) und die Tankwände (1)
den Kraftstoffraum im Tank begrenzen, **dadurch gekennzeichnet, dass** die elastische Trennwand (6) den durch sie begrenzten Überkraftstoffraum in separate abgedichtete Kleinräume (9) aufteilt, so dass der Umfang des Überkraftstoffraums in einzelne abgedichtete und senkrecht ausgerichtete Kleinräume (9) aufgeteilt ist.

2. Kraftstofftank nach Anspruch 1, wobei die elastische Trennwand die gleiche Form und gleichen Umfang wie der Kraftstofftank aufweist, und wobei
jeder Kleinraum (9) mit einer getrennten Überdruckzuleitung (5) und einer getrennten Oberdruckableitung (11) versehen und mit einer Steuereinheit verbunden ist.

## Claims

1. A fuel tank having an elastic partition (3, 6) that lines the fuel tank and divides it into a fuel chamber (10) and an excess fuel chamber with mutually variable circumferences, in which the fuel chamber (10) is provided with a fill nozzle (8) and the excess fuel chamber (9) is provided with a line (5) for supplying overpressure, and the elastic partition (3, 6) and the tank walls (1) define the fuel chamber in the tank, **characterized in that** the elastic partition (6) divides the excess pressure chamber, defined by it, into separate sealed small chambers (9), so that the circumference of the excess fuel chamber is divided into individual sealed and vertically oriented small chambers (9).

2. The fuel tank of claim 1, wherein the elastic partition has the same shape and the same circumference as the fuel tank, and wherein each small chamber (9) is provided with a separate overpressure supply line (5) and a separate overpressure withdrawal line (11) and communicates with a control unit.

## Revendications

1. Réservoir de carburant muni d'une cloison séparatrice élastique (3, 6) procurant un chemisage audit réservoir de carburant et scindant ce dernier en une chambre (10) de carburant et en une chambre de carburant excédentaire, qui présentent des volumes réciproquement variables, ladite chambre (10) de carburant étant pourvue d'un raccord d'emplissage (8), et ladite chambre (9) de carburant excédentaire étant dotée d'un conduit (5) dédié à l'admission d'une surpression, sachant que ladite cloison séparatrice élastique (3, 6) et les parois (1) du réservoir
délimitent ladite chambre de carburant dans ledit réservoir, **caractérisé par le fait que** la cloison séparatrice élastique (6) subdivise la chambre de carburant excédentaire, qu'elle délimite, en des compartiments distincts (9) dont l'étanchéité est assurée, de sorte que le volume de ladite chambre de carburant excédentaire est subdivisé en des compartiments distincts (9) orientés verticalement, dont l'étanchéité est assurée,

2. Réservoir de carburant selon la revendication 1, dans lequel la cloison séparatrice élastique possède la même forme et le même périmètre que ledit réservoir de carburant, et dans lequel
chaque compartiment (9) est équipé d'un conduit distinct (5) d'admission d'une surpression et d'un conduit distinct (11) d'évacuation d'une surpression, et est raccordé à une unité de commande.
